# EUROPÄISCHE PATENTSCHRIFT

(11) **EP 0 623 411 B1**
(45) Veröffentlichungstag und Bekanntmachung des Hinweises auf die Patenterteilung: **08.07.1998**
(21) Anmeldenummer: 94106037.8
(22) Anmeldetag: 19.04.1994
(51) Int. Cl.: B23C 5/20, B23C 5/10, B23C 5/22, B27G 13/12

(54) **Fräswerkzeug**
Milling tool
Outil de fraisage

(30) Priorität: 03.05.1993 DE 9306636 U
(43) Veröffentlichungstag der Anmeldung: 09.11.1994
(73) Patentinhaber: Pokolm, Marco, 33102 Paderborn (DE)
(72) Erfinder: Pokolm, Marco, 33102 Paderborn (DE)
(74) Vertreter: Hanewinkel, Lorenz, Dipl.-Phys.

(56) Entgegenhaltungen:
- EP-A- 0 096 147
- EP-A- 0 216 064
- US-A- 4 116 579
- US-A- 5 064 316
- US-A- 5 108 234
- PATENT ABSTRACTS OF JAPAN vol. 16, no. 426 (M-1306) 8. September 1992 & JP-A-04 146 015 (HITACHI TOOL) 20. Mai 1992

## Beschreibung

Die Erfindung bezieht sich auf ein Fräswerkzeug mit einem einen Kopf aufweisenden, um seine Längsachse drehbaren schaftförmigen Träger und einer in einem stirnseitigen Schlitz des Kopfes eingesetzten und im Kopf befestigten Schneidplatte mit zwei identischen Schneidkantenpaaren mit jeweils zwei im Schneidplattenumfang hintereinanderliegenden, zu entgegengesetzten Plattenseiten gerichteten und durch an beiden Plattenseiten liegenden, stufenförmigen Ausnehmungen gebildeten Schneidkanten, wobei ein Schneidkantenpaar zwei zu radial gegenüberliegenden Seiten der Längsachse des Trägers verlaufende Schneidkanten hat.

Ein derartiges Fräswerkzeug ist aus der US-A-5 108 234 bekannt; hierbei sind die Schneidkanten der Schneidplatte aus der Plattenmittelebene versetzt, so daß kein definierter Radius beim Schleifen der Schneidkanten entstehen kann und eine Radiusverzerrung erfolgt.

Aufgabe der Erfindung ist es, ein nach der eingangs genannten Art aufgebautes Fräswerkzeug mit einer verbesserten Schneidplatte auszustatten, deren Schneidkanten unter Vermeidung von Radiusverzerrungen eine optimale Lage in der Schneidplatte haben, und wobei die Schneidplatte im Fräswerkzeugkopf eine genaue und sichere Lagefixierung erhält.

Diese Aufgabe wird erfindungsgemäß dadurch gelöst, daß alle Schneidkanten in der Mittelebene der Schneidplatte liegen und in Umfangsrichtung der Schneidplatte unmittelbar einander folgen,
die abgestuften Ausnehmungen von auf der halben Plattenstärke liegenden ebenen Flächen und daran zur vollen Plattenstärke hin schräg ansteigenden ebenen Flanken gebildet sind
   und
der Schlitz in seinem Grund und den sich daran anschließenden Schlitz-Seitenwänden komplementär in Bezug auf ein Schneidkantenpaar mit Ausnehmungen ausgebildet ist.

Die Schneidkantenpaare der Schneidplatte gemäß der Erfindung liegen genau auf der Mittelebene der Schneidplatte, wodurch eine Radiusverzerrung vermieden wird.

Durch die komplementäre Ausbildung des Schlitzgrundes und der Schlitz-Seitenwände zu einem Schneidkantenpaar wird eine genaue und sichere Lagefixierung der Schneidplatte im Träger erreicht. Die Schneidplatte liegt mit ihren Ausnehmungen und Flanken des in den Schlitz eingreifenden Schneidkantenpaares auf Gegenflächen (Schrägflächen und Seitenflächen) des Schlitzes an, ist somit in Radialrichtung im Schlitz geführt und wird durch eine Schraube dann festgezogen und eingespannt.

Die Schneidplatten können einen runden oder elliptischen oder auch eckigen, beispielsweise quadratischen oder rechteckigen Umriß aufweisen. Es sind auch andere Umrißformen möglich.

Im folgenden werden bevorzugte Ausführungsbeispiele der Erfindung anhand der beigefügten Zeichnung näher erläutert.
- Fig. 1: ist eine Draufsicht auf eine elliptische Schneidplatte gemäß der Erfindung in vergrößertem Maßstab;
- Fig. 2: ist eine Stirnansicht zu Fig. 1 entsprechend dem Pfeil II in Fig. 1;
- Fig. 3: ist eine Seitenansicht der Schneidplatte gemäß Fig. 1 in Pfeilrichtung III;
- Fig. 4: ist eine Teildraufsicht auf einen Träger mit erfindungsgemäßer Schneidplatte;
- Fig. 5: ist eine zugehörige Seitenansicht;
- Fig. 6: ist eine entsprechende Stirnansicht;
- Fig. 7: zeigt eine im Umriß quadratische Schneidplatte in Draufsicht.

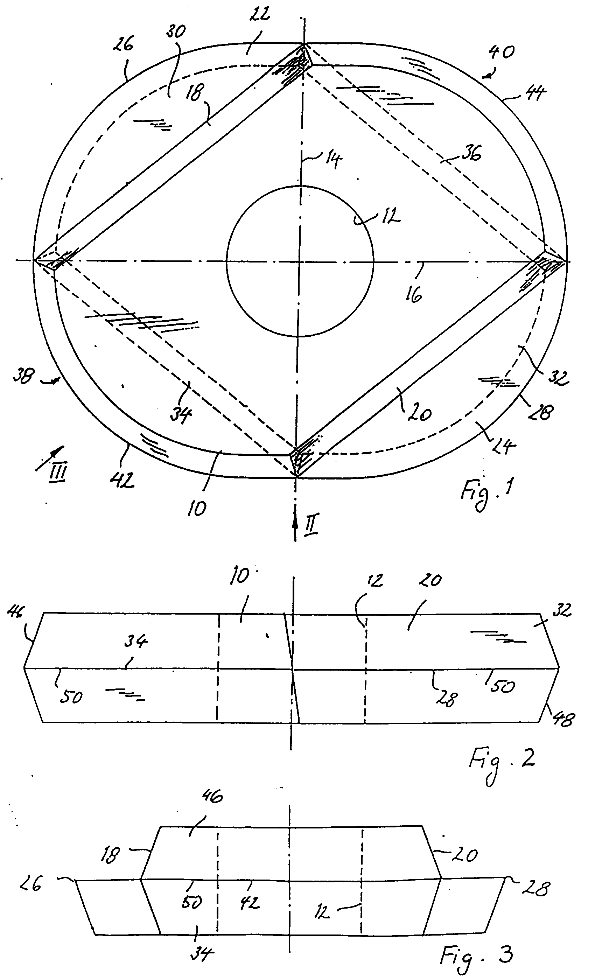

In Fig. 1 und 2 ist eine Schneidplatte 10 gezeigt, die einen im wesentlichen elliptischen Umriß sowie eine kreisförmige Bohrung 12 im Mittelpunkt aufweist.

Zwischen benachbarten Schnittpunkten der Achsen 14 und 16 der Ellipse mit der Umrißlinie der Ellipse verlaufen auf gegenüberliegenden Seiten schräg abfallende Flanken 18,20, die einen stufenförmigen Übergang zu tieferliegenden Flächen 22,24 bilden, deren äußere Ränder Schneidkanten 26,28 darstellen. Durch diese Abstufung entstehen auf gegenüberliegenden Umfangsbereichen der Ellipse Ausnehmungen 30,32. Die Flanken 18,20 stellen in sich ebene Flächen dar. Die Ausnehmungen 30,32 weisen eine Tiefe auf die der halben Plattenstärke entspricht.

In den beiden anderen einander gegenüberliegenden Quartalen der Schneidplatten, also links unten und rechts oben in Fig. 1, befinden sich entsprechende Flanken 34,36 auf der Unterseite der Schneidplatte, die in Fig. 1 verdeckt und daher nur gestrichelt angedeutet sind. Dadurch werden Ausnehmungen 38,40 gebildet, die den Ausnehmungen 30,32 entsprechen, jedoch von der gegenüberliegenden, in Fig. 1 verdeckten Seite her in die Schneidplatte eintreten. Durch die Ausnehmungen 38,40 werden Schneidkanten 42,44 freigelegt.

Aus Fig. 2 geht zusätzlich hervor, daß die Ränder 46,48 der Schneidplatte, soweit sie nicht durch Bildung der Ausnehmungen 30,32,38,40 entfallen, von einer die Plattenstärke halbierenden Mittelebene 50 aus zurücklaufend abgeschrägt sind.

Fig. 3 ist eine Ansicht von links unten in Fig. 1 entsprechend dem Pfeil III. Die Flanke 34 ist in dieser Ansicht erkennbar.

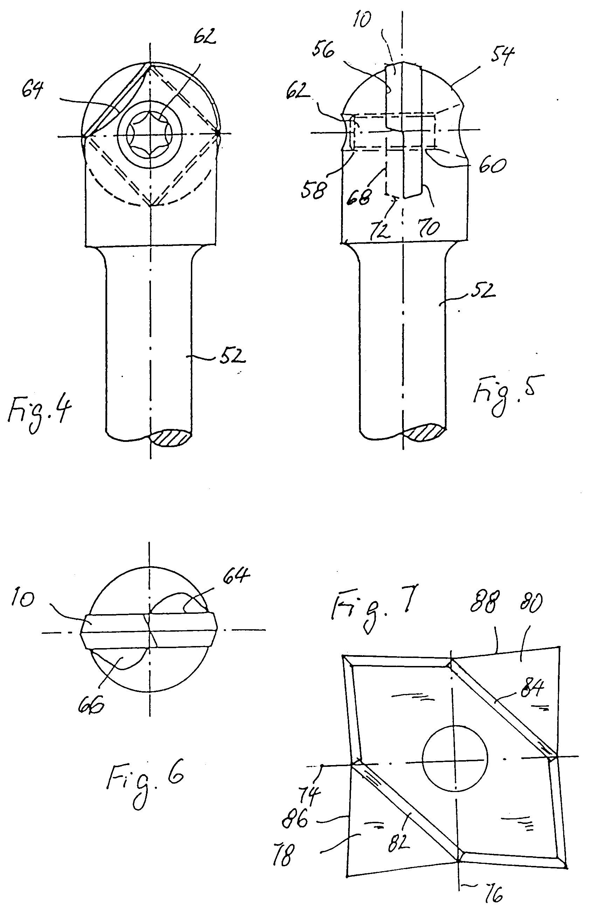

Fig. 4 bis 6 zeigen einen Träger 52, der die Form eines länglichen Schafts zur Aufnahme in ein nicht gezeigtes Futter einer Fräsmaschine aufweist und im dargestellten Beispiel einen kugelförmig abgerundeten Kopf 54 aufweist. Diese Form ist jedoch nicht zwingend erforderlich.

In dem Kopf 54 befindet sich ein von der Stirnseite her eintretender Schlitz 56, der eine Schneidplatte 10 aufnimmt. Beiderseits des Schlitzes 56 befinden sich in dem Kopf fluchtende Bohrungen 58,60, von denen die Bohrung 58 eine Gewindebohrung darstellt. Die Bohrungen sind so angeordnet, daß sie bei eingeschobener Schneidplatte 10 mit deren Bohrung 12 fluchten. Eine Schraube 62 legt die Schneidplatte in dem Kopf 54 fest. Der Kopf 54 weist gemäß Fig. 4 und 6 zwei linsenförmige Ausnehmungen 64,66 auf gegenüberliegenden Seiten des Schlitzes auf, die die jeweils im Einsatz befindlichen Schneidkanten eines der Schneidkantenpaare freilegen.

Wie aus Fig. 5 hervorgeht, sind die beiden seitlichen Wände 68,70 und deren Grund 72 nicht als ebene Flächen ausgebildet, sondern vollständig komplementär an die Konturen eines der Schneidkantenpaare, das in Fig. 5 unten liegt, angepaßt. So springt beispielsweise gemäß Fig. 5 die links liegende seitliche Wand im unteren Bereich über eine nicht bezeichnete seitliche Flanke bis zur halben Schlitzbreite nach innen vor. Der Grund ist im übrigen von der Mittelebene des Schlitzes her entsprechend den abgeschrägten Rändern 46,48 der Schneidplatte abgeschrägt. Dadurch ergibt sich eine feste Abstützung und Arretierung der Schneidplatte in dem Schlitz 56.

Fig. 7 zeigt eine Draufsicht auf eine Schneidplatte 10 mit einem insgesamt quadratischen Umriß, der jedoch zu den Schnittpunkten mit den Achsen 74,76 hin leicht eingezogen ist. Unten links und und oben rechts in Fig. 7 befinden sich in den durch die Achsen 74,76 gebildeten Quartalen Ausnehmungen 78,80 auf der in Fig. 7 sichtbaren Seite der Schneidplatte, die wiederum durch schräg aufsteigende Flanken 82,84 begrenzt sind. Die äußere Kante der verbleibenden Materialstärke der Schneidplatte bildet wiederum Schneidkanten 86,88.

In dem links oben und rechts unten in Fig. 7 liegenden Quartal der Schneidplatte befinden sich entsprechende Ausnehmungen an der nicht gezeigten Unterseite der Schneidplatte.

Bei dieser Ausführungsform, ebenso wie bei einer kreisrunden Ausführungsform, sind gegenüberliegende Schneidplattenpaare stets gleichsinnig schneidend, also rechtsschneidend oder linksschneidend. Es besteht jedoch auch die Möglichkeit, etwa anstelle der rechts und links in Fig. 7 liegenden Schneidplattenpaare die oben und unten liegenden Schneidplattenpaare einzusetzen. Diese schneiden dann im entgegengesetzten Sinne.

## Patentansprüche

1. Fräswerkzeug mit einem einen Kopf (54) aufweisenden, um seine Längsachse drehbaren schaftförmigen Träger (52)
und
einer in einem stirnseitigen Schlitz (56) des Kopfes (54) eingesetzten und im Kopf (54) befestigten Schneidplatte (10) mit zwei identischen Schneidkantenpaaren mit jeweils zwei im Schneidplattenumfang hintereinanderliegenden, zu entgegengesetzten Plattenseiten gerichteten und durch an beiden Plattenseiten liegenden, stufenförmigen Ausnehmungen (30, 40; 32, 38) gebildeten Schneidkanten (26, 44; 28, 42),
wobei ein Schneidkantenpaar zwei zu radial gegenüberliegenden Seiten der Längsachse des Trägers verlaufend Schneidkanten hat,
dadurch gekennzeichnet, daß
alle Schneidkanten (26, 44; 28, 42) in der Mittelebene (50) der Schneidplatte (10) liegen und in Umfangsrichtung der Schneidplatte (10) unmittelbar einander folgen,
die abgestuften Ausnehmungen (30, 40; 32, 38) von auf der halben Plattenstärke liegenden ebenen Flächen und daran zur vollen Plattenstärke hin schräg ansteigenden ebenen Flanken (18, 36; 20, 34) gebildet sind
und
der Schlitz (56) in seinem Grund (72) und den sich daran anschließenden Schlitz-Seitenwänden (68, 70) komplementär in Bezug auf ein Schneidkantenpaar mit Ausnehmungen (30, 40; 20, 34) ausgebildet ist.

2. Fräswerkzeug nach Anspruch 1, dadurch gekennzeichnet, daß die Schneidplatte (10) von der die Plattenstärke halbierenden Ebene (50) aus an den Rändern (46, 48) zu den Schneidkanten (22, 44; 28, 42) zurücklaufend abgeschrägt ist.

3. Fräswerkzeug nach Anspruch 1 oder 2, dadurch gekennzeichnet, daß die Schneidplatte (10) eine mittige Befestigungsbohrung (12) aufweist und daß der Träger (52) im Bereich des Schlitzes (56) entsprechend angeordnete, fluchtende Bohrungen (58, 60) aufweist, von denen eine (58) ein Gewinde zur Aufnahme einer Spannschraube (62) aufweist.

4. Fräswerkzeug nach einem der Ansprüche 1 bis 3, dadurch gekennzeichnet, daß die Schneidplatte (10) kreisrund ist, daß die Schneidkanten (24, 44; 28, 42) jeweils einen Viertelkreis einnehmen und daß die Flanken (18, 36; 20, 34) der Ausnehmungen (30, 40; 32, 38) in quadratischer Anordnung liegen.

5. Fräswerkzeug nach einem der Ansprüche 1 bis 3, dadurch gekennzeichnet, daß die Schneidplatte (10) einen im wesentlichen elliptischen Umriß aufweist und daß sich die Schneidkanten (24, 44; 28, 42) jeweils zwischen den Schnittpunkten der Hauptachsen (14, 16) mit dem Umfang der Ellipse erstrecken.

6. Fräswerkzeug nach einem der Ansprüche 1 bis 3, dadurch gekennzeichnet, daß die Schneidplatte (10) einen quadratischen Umriß aufweist und daß sich die Schneidkanten (86, 88) jeweils zwischen den Schnittpunkten der Achsen (74, 76) des Quadrats mit dessen Umfang erstrecken und daß der Umriß des Quadrats zu den Schnittpunkten der Achsen (74, 76) des Quadrats mit dessen Umfang hin leicht eingezogen ist.

## Claims

1. Milling cutter having a shank-shaped support (52) which is adapted to rotate about its longitudinal axis and incorporates a cutter head (54), and
having a cutting tip (10) which is inserted in a slot (56) at the front of the head (54) and mounted in the head (54), and which has two identical cutting edge pairs, each with two cutting edges (26, 44; 28, 42) situated one behind the other in the cutting tip's periphery, said edges being aligned on opposed faces of the tip and formed by step-shaped recesses (30, 40; 32, 38) situated on both faces of the tip, with a pair of cutting edges having two cutting edges extending on radially opposite sides of the longitudinal axis of the support,
characterised in that
all the cutting edges (26, 44; 28, 42) are situated in the middle plane (50) of the cutting tip (10) and immediately follow one another in the circumferential direction of the cutting tip (10),
the stepped recesses (30, 40; 32, 38) are constituted by plane surfaces situated on half the thickness of the tip and plane flanks (18, 36; 20, 34) which ascend diagonally in relation thereto towards the full thickness of the tip, and
the floor (72) and adjoining side walls (68, 70) of the slot (56) are of complementary construction to a cutting edge pair with recesses (30, 40; 20, 34).

2. Milling cutter according to claim 1, characterised in that from the plane (50) which bisects the thickness of the tip, the edges (46, 48) of the cutting tip (10) are bevelled back to the cutting edges (22, 44; 28, 42).

3. Milling cutter according to claim 1 or 2, characterised in that the cutting tip (10) features a central mounting hole (12) and that in the region of the slot (56) the support (52) features correspondingly arranged holes (58, 60) in alignment, one of which (58) is threaded to receive a straining screw (62).

4. Milling cutter according to any of claims 1 to 3, characterised in that the cutting tip (10) is perfectly circular, that the cutting edges (24, 44; 28, 42) in each case occupy a quarter of the circle and that the flanks (18, 36; 20, 34) of the recesses (30, 40; 32, 38) are in a square arrangement.

5. Milling cutter according to any of claims 1 to 3, characterised in that the cutting tip (10) has a substantially elliptical outline and that the cutting edges (24, 44; 28, 42) in each case extend between the points of intersection of the main axes (14, 16) with the circumference of the ellipse.

6. Milling cutting according to any of claims 1 to 3, characterised in that the cutting tip (10) has a square outline and that the cutting edges (86, 88) in each case extend between the points of intersection of the axes (74, 76) of the square with the circumference thereof, and that the outline of the square is retracted slightly towards the points of intersection of the axes (74, 76) of the square with the circumference thereof.

## Revendications

1. Outil de fraisage comprenant
un support (52) en forme de tige tournant autour de son axe longitudinal et pourvu d'une tête (54)
et
une plaque de coupe (10) fixée dans une fente (56) frontale de la tête (54) et présentant deux paires identiques de bords coupants comprenant respectivement deux arêtes coupantes (26, 44; 28, 42) qui, se succèdant sur le pourtour de la plaque de coupe sont formées par des dégradations (30, 40; 32, 38) s'étendant des deux côtés de la plaque, sont orientées dans des directions opposées, l'une des paires de bords de coupe étant pourvue de deux arêtes coupantes qui s'étendent vers des côtés radialement opposés de l'axe longi-tudinal du support,
caractérisé en ce que
toutes les arêtes coupantes (26, 44; 28, 42) sont situées dans le plan médian (50) de la plaque de coupe (10) et se succèdent directement dans le sens circonférentiel de la plaque de coupe (10), les dégradations (30, 40; 32, 38) sont formées par des surfaces planes occupant la moitié de l'épaisseur de la plaque et des flancs plans (18, 36; 20, 34) qui, partant de ces dernières, s'élèvent en pente jusqu'à la pleine épaisseur de la plaque,
le fond (72) et les parois latérales (68, 70) de la fente (56) sont conçues complémentairement par rapport à une paire de bords de coupe avec dégradations (30, 40; 20, 34).

2. Outil de fraisage selon la revendication 1,
caractérisé en ce que
La plaque de coupe (10) s'étend obliquement, remontant du plan bissecteur (50) jusqu'au arêtes coupantes (22, 44; 28, 42), sur les bords de coupe (46, 48).

3. Outil de fraisage selon la revendication 1 ou 2,
caractérisé en ce que
la plaque de coupe (10) présente une perforation centrale de fixation (12) et que le support (52) est pourvu, dans la zone de la fente (56), de perforations (58, 60) disposées en alignement dont l'une (58) est filetée et destinée à accueillir une vis de serrage (62).

4. Outil de fraisage selon l'une des revendications 1 à 3,
caractérisé en ce que
la plaque de coupe (10) est circulaire et que les arêtes coupantes (24, 44; 28, 42) occupent chacune un quart de cercle et que les flancs (18, 36; 20, 34)des dégradations (30, 40; 32, 38) sont disposées quadrangulairement.

5. Outil de fraisage selon l'une des revendications 1 à 3,
caractérisé en ce que
la plaque de coupe (10)présente un contour sensiblement elliptique et que les arêtes coupantes (24, 44; 28, 42) s'étendent sur le pourtour de l'ellipse, entre les points d'intersection.

6. Outil de fraisage selon l'une des revendications 1 à 3,
caractérisé en ce que
la plaque de coupe (10) présente un contour carre et que les arêtes coupantes (86, 88) s'étendent entre les points d'intersection des axes (74, 76) du carré en suivant son pourtour et que le contour du carré est légèrement en retrait vers les points d'intersection des axes (74, 76).
